# EUROPEAN PATENT APPLICATION

(11) **EP 1 625 785 A1**
(43) Date of publication of application: **15.02.2006**
(21) Application number: 05076850.6
(22) Date of filing: 09.08.2005
(51) Int. Cl.: A01G 13/02, C09K 17/52

(54) **Biologically degradable ground cover, dry product for use in the forming thereof and method for forming biologically degradable ground cover**

(30) Priority: 10.08.2004 NL 1026816; 29.10.2004 NL 1027382
(71) Applicant: Ruitenberg Ingredients B.V., 7391 TM Twello (NL)
(72) Inventor: Suurs, Patricia Rosa Maria, 7412 VN Deventer (NL)
(74) Representative: Barendregt, Frank

(57) **Abstract**

The invention relates to a biologically degradable ground cover consisting of a nonwoven-type material which is matched to the profile of the surface of the soil and is obtainable by applying an aqueous solution of a water-soluble alginate and biologically degradable fibres which are distributed in water to the soil and using metal cations to crosslink the water-soluble alginate, which is characterized in that the metal cations comprise a mixture of metal cations with a valency of two and with a valency of higher than two.

The invention also relates to a dry product for use in forming a biologically degradable ground cover, and in particular the dry product comprises 20-98% by weight of biologically degradable fibres and 0.5-20% by weight of water-soluble alginate, as well as fillers up to 100%.

The invention also relates to the method for forming a ground cover on the surface of an area of ground.

## Description

The invention relates firstly to a biologically degradable ground cover consisting of a nonwoven-type material which is matched to the profile of the surface of the soil and is obtainable by applying an aqueous solution of a water-soluble alginate and biologically degradable fibres which are distributed in water to the soil and using metal cations to crosslink the water-soluble alginate.

A biologically degradable ground cover of this type is known from PCT/NL2004/00057 in the name of the present Applicant.

The abovementioned patent application describes a biologically degradable ground cover of the type described which can be formed in situ on the surface of an area of ground in order to cover it. After the cover has been applied to the surface of an area of soil that is to be covered, the plants or crops which are to be cultivated, from an initial stage, will easily be able to break through the ground cover in order to reach their full growth; any minimal weeds or seeds thereof which may be present will be impeded from reaching their full growth by the cover, so that all nutrients from the soil remain entirely available to the intended plants or remain available in the soil for subsequent use.

The need for weeding can be virtually completely eliminated by the presence of the ground cover. The layer formed from biologically degradable fibres, such as for example plant fibres, and alkali metal or ammonium alginate is sprayed with a solution containing metal cations in order to crosslink the alginate.

In the abovementioned patent application in the name of the present Applicant, the metal cation used is generally the calcium ion, in order to crosslink with alginate, with the result that the biologically degradable ground cover will retain its cohesion over the course of time.

Attention was already paid in the abovementioned application to the problem of the network made up of biologically degradable fibres and crosslinked alginate drying out. One solution to this in the application was found to lie in the incorporation of plasticizer, which substantially prevents this drying-out and results in better retention of cohesion between the set of fibres.

However, another problem of the biologically degradable ground cover as described above resides in the fact that the crosslinking of the alginate leads to considerably shrinkage of the ground cover formed from biologically degradable fibres and alginate. One consequence of this is that spaces are formed around the plants which grow through the ground cover, making the entire ground cover susceptible to the influences of wind. In the event of strong winds, the wind may blow under the ground cover and then tear the entire ground cover into pieces and blow it away. Extensive shrinkage can also give rise to tears in the crosslinked ground cover with the same disadvantageous susceptibility to wind.

The effect which can be achieved by the ground cover will then no longer be achieved, rendering the ground cover useless.

It is the object of the present invention to create a solution to the above problem, and to this end the present invention is characterized in that the metal cations comprise a mixture of metal cations with a valency of two and with a valency of higher than two.

The divalent metal cations are expediently selected from magnesium and calcium ions, while the metal cations with a valency of higher than two comprise at least trivalent aluminium ions. Another metal ion with a valency of three or more which can be used is the iron (III) ion.

The metal cations preferably comprise calcium and aluminium ions.

Surprisingly, therefore, it has emerged that if the alginate used is crosslinked by using a mixture of ions with a valency of two and above, in particular calcium and aluminium ions, strong crosslinking of the alginate takes place, while the shrinkage has substantially disappeared.

The Applicant has not yet found an explanation for this disappearance of the shrinkage phenomenon; however, the effect is pronounced and is clearly related to the presence of both divalent metal cations and metal cations with a valency of more than two.

If tests are carried out using, for example, exclusively calcium ions or exclusively aluminium ions, the results are inferior to the result obtained in the presence of both calcium and aluminium ions; a synergistic effect is present in the combined action of calcium and aluminium ions in the crosslinking of water-soluble alginate, such as sodium alginate.

The fibres which can be used in the biologically degradable ground cover may be selected from vegetable and animal fibres or mixtures of two or more of these fibre types. Examples of such fibres include coir fibres, hemp fibres, paper fibres, cellulose fibres, manure fibres and plant fibres, although the invention is not restricted to the fibres mentioned in this list.

The length of the fibres which can be used is important; the length of the fibres is expediently from 500-3000 µm, preferably 500-2500 µm most preferably 500-2000 µm.

In one attractive embodiment of the invention, the ground cover comprises a light retardant. The term "light retardant" is to be understood as meaning that when then light retardant is incorporated in the ground cover, less light is transmitted through the cover to the ground. The prevention of the transmission of light counteracts the undesired growth of, for example, weeds and other undesired plants. Examples of light retardants include colours and pigments with which light of a selected wavelength can be selectively transmitted or blocked. One such example is carbon, which produces a black colour. If sufficient carbon is incorporated, total light absorption can be obtained. The person skilled in the art will be able to select the desired quantity of carbon so as to achieve the required effect. Suitable sources of carbon are known to the person skilled in the art, for example Norit AA, CN₃, SA₂ (Norit, the Netherlands). Other suitable colours and pigments are known to the person skilled in the art; examples include tartrazine (yellow), erythrosine (red), indigotin (blue), chlorophyllin (green). It is also possible to use combinations of pigments or colours. The ground cover according to the invention is, incidentally, water-permeable, with the result that the ground receives sufficient moisture. Furthermore, a desired retarding and/or selective action with regard to the transmission of light can be obtained according to the incorporation of a light retardant and the concentration thereof.

The air permeability of the ground covering material can also be controlled as a function of the choice of fibres.

Of course, the thickness of a ground cover according to the present invention may vary; however, it has been found that a nonwoven with a thickness of 0.5 mm creates a sufficiently strong ground cover which can withstand external mechanical influences (for example hail or torrential rain) and can also be successfully walked on. The absence or virtual absence of shrinkage, on account of the presence of for example a mixture of calcium and aluminium ions for the crosslinking of the alginate, to a large extent prevents the wind from having any effect, so that the biologically degradable ground cover retains its position on the soil, following the contours of the soil.

Furthermore, a plasticizer may expediently be present in the biologically degradable ground cover as described above. This is related to the fact that during periods of high temperature and/or low atmospheric humidity, the water content of a ground cover layer may drop below a desired value, for example lower than at least 10%, based on the weight of the dry matter of the material, which can cause the ground cover to loose cohesion. To counteract this loss of cohesion, it is possible to incorporate a plasticizer in the material. The plasticizer primarily influences the binding properties of the alginate binder. Suitable plasticizers may be selected from a wide range which will be obvious to the person skilled in the art. Examples of suitable plasticizers include organic polyols, such as ethylene glycol, propylene glycol, glycerol, polyethylene glycol and the like. Among these materials, glycerol is preferred. The quantity of plasticizer to be added is not critical and amounts, for example, to 0.1-5%, based on the total weight of biologically degradable fibres and alginate; in particular 1-5% by weight. The plasticizer may also be included in the crosslinking solution containing Ca²⁺ and Al³⁺. In that case, the quantity of plasticizer is 1-20%, preferably 5-20%, based on the weight of the solution.

In the context of the invention, reference is also made to WO 00/32030. This publication describes the use of a latex binder, such as a natural or synthetic latex or styrene. The ground cover is formed by (1) simultaneously and separately applying to the soil an aqueous solution which comprises a binder that solidifies in air, such as a latex, and optional fillers and other active ingredients, and (2) a mixture of dry natural fibres, optionally mixed with an opacifying agent, to the soil that is to be covered. Therefore, the fibres are applied dry, which requires specific devices with an accurate setting, which makes homogeneity of the fibre coverage on the ground problematic for example if the moisture content of the fibres is not optimum.

Furthermore, reference is also made to US-A-6,029,395, which describes a biologically degradable ground covering material which is formed by an open-cell foam material which must firstly be foamed before the ready-to-use mats are placed onto the ground. A material which can be formed in situ, like the material in accordance with the present invention, is not described.

EP-A-0 578 107 describes nonwoven materials which are needled in order to be stabilized. At least on the outer side, the nonwoven materials are covered with a layer of biologically degradable material, such as starch or alginate. A ground covering material that can be formed in situ is not described.

GB-B-641 280 describes a material such as flower pot or plate-like seed or plant carrier which consists of a naturally moisture-absorbing fibre material, such as peat, moss or the like, which is mixed with alginate as binder. If appropriate, the pot is covered on the outer side with a calcium salt solution in order to improve the cohesion. This publication also does not describe a ground covering material which can be formed in situ.

The latter publication does not describe the use of a mixture of divalent metal cations and metal cations with a valency of higher than two, such as calcium ions and aluminium ions, in order to crosslink the water-soluble alginate used so as to substantially avoid shrinkage.

The term "ground" is to be understood as meaning the type of soil which is suitable for agricultural purposes. The term "biologically degradable" is to be understood as meaning that the material in question loses its strength and cohesion over the course of time under the action of microorganisms and/or the effects of weather and can ultimately break down, with the result that the nonwoven formed as a biologically degradable ground cover decays and is easy to work into the ground. The time required for this to occur is preferably less than one year, more preferably less than six months and most preferably less than three months.

The invention also relates to a dry product for use in forming a biologically degradable ground cover as described above. The said dry product is characterized in that it comprises at least biologically degradable fibres of a length of 500-3000 µm selected from vegetable and animal fibres and mixtures of two or more of these fibre types. The fibres may be selected from the fibres as mentioned earlier in the present description and the length of the fibres is advantageously from 500-2500 µm, preferably from 500-2000 µm.

In addition to biologically degradable fibres, the dry product expediently contains a water-soluble alginate. The alginate preferably comprises a mixture of alginate with a high "G-block" content and alginate with a high "M-block" content. "G-block" and "M-block" are terms which are known in the specialist field. G-block relates to a part of the alginate molecule which comprises polyguluronic acid and forms rigid gels; M-block relates to the part of the alginate which comprises polymannuronic acid and forms elastic gels. Water-soluble sodium alginates of this type are known to the person skilled in the art, for example Manugel DMB (with an M-block:G-block content of 30:70) and Manucol DM (with an M-block: G-block content of 60:40). Manugel and Manucol are tradenames of Kelco Inc., USA. Alginates with a high G-block content or a high M-block content are also known under the brand names Protanal® (FMC Biopolymer, Belgium) and Algogel® (Brenntag NV, Belgium).

The dry product according to the invention expediently contains 20-98% by weight of biologically degradable fibres and 0.5-20% by weight of water-soluble alginate, as well as fillers up to 100%. Suitable fillers will be obvious to the person skilled in the art and may be selected from kaolin, bentonite, diatomaceous earth, montmorillonite and numerous others. As will be described in more detail below, in certain cases it may be advantageous to use bentonite.

The dry product advantageously comprise 35-50% by weight of biologically degradable fibres and 1.0-10% by weight of water-soluble alginate, as well as fillers up to 100%. The quantity of filler used is not critical and generally amounts to 10-40%, based on the total of the dry product, and preferably 15-40%. As indicated above, the fibres which can be used are preferably selected from coir fibres, hemp fibres, paper fibres, cellulose fibres, manure fibres, plant fibres and mixtures of two or more of these fibre types.

In an attractive embodiment, the filler in the dry product described above comprises a source of acid-releasable aluminium ions; an example of a source of this nature is bentonite.

In another attractive embodiment, the filler in the dry product comprises a source of acid-releasable calcium ions; an example of a source of this type is tricalcium phosphate.

In particular, the dry product described above includes both a source of acid-releasable aluminium ions and a source of acid-releasable calcium ions.

In the embodiment described above, the aluminium ions and/or calcium ions required for the crosslinking of soluble alginate, such as sodium alginate, are provided in the form of sources from which these ions can be released and therefore made available in situ from the mixture that has been applied to the ground. The release is effected by bringing the mixture of biologically degradable fibres, water-soluble alginate and sources of aluminium ions and/or calcium ions which have been applied to the ground that is to be covered into contact with a solution which reduces the pH of the moist mixture to below 5. The sources of aluminium and calcium ions, such as bentonite and tricalcium phosphate, respectively, are dissolved at this pH and release aluminium and calcium ions. In this way, the alginate within the mixture is crosslinked from within.

The invention also relates to a method for forming a ground cover on the surface of an area of ground, in which biologically degradable fibres and a water-soluble alginate are applied to the ground from an aqueous medium and the alginate is crosslinked using divalent metal cations, which method is characterized in that metal cations with a valency higher than two are also used for the crosslinking.

In the method in general, an aqueous suspension which includes biological degradable fibres is spread over an area of ground that is to be covered, while an alginate solution is also being distributed over the same area of ground, from a separate reservoir. On account of its film-forming character, the sodium alginate solution will, for example, cover the biologically degradable fibres while also penetrating between the fibres.

Then, a separate solution of, for example calcium chloride is formed on the ground cover which has been formed in situ in this way; the calcium ions crosslink the alginate, so that cohesion is produced between the biologically degradable fibres and the alginate.

Obviously, a dry product as described above which comprise biologically degradable fibres and alginate, to allow the method to be carried out, can also be dispersed in water and then spread in its entirety over an area that is to be covered. The subsequent spraying with calcium chloride solution then again brings about crosslinking of the alginate.

According to the invention, however, instead of a solution which contains exclusively divalent metal cations, a solution which also contains metal cations with a valency of higher than two is used.

In particular, the metal cations with a valency of higher than two are trivalent aluminium ions, so that that the metal cation solution expediently contains both calcium ions and aluminium ions.

The method as described above specifically uses an aqueous solution which contains calcium and aluminium ions in a quantity of 1-25% by weight of calcium chloride and 0.01-25% by weight of aluminium chloride.

The solution preferably comprises 1.0-5.0% by weight of calcium chloride and 0.01-5.0% by weight of aluminium chloride.

In one attractive embodiment of the method, as stated above, the ground cover is formed by adding a dry product according to the invention as described above to an aqueous medium and distributing the suspension obtained in this way over the area of ground that is to be covered, obviously followed by the supply of a mixture of divalent metal cations and metal cations with a valency of higher than two in order to crosslink the alginate that is present. The suspension to be spread on the ground contains, for example, dry product in a quantity of 20-200 grams per litre of suspension and preferably 50-150 grams per litre of suspension. The suspension can advantageously be applied to the ground by using a spraying installation as is customary in agriculture and horticulture.

In principle, it is possible to use a three-head spraying installation, in which case one spraying head is used to spray a suspension of biologically degradable fibres; one spraying head is used for an alginate solution and one spraying head is used for a solution of, for example, calcium and aluminium ions in water.

If the starting point for the formation of the biologically degradable ground cover is a dry mixture which contains biological fibres and alginate, which mixture is dispersed in the water, it is possible to make do with a two-head spraying installation.

It may possibly even be feasible to do with a one-head installation if the suspension of biologically degradable fibres, the alginate solution and the solution of the metal cation mixture are added together before they are spread over the ground. It is possible for all the ingredients to be added together if there is an agent which retards crosslinking present in the suspension, preventing rapid crosslinking of the alginate. Examples of agents which retard crosslinking include EDTA (ethylenediaminetetraacetic acid), phosphates, such as sodium polyphosphate, sodium hexametaphosphate, citrates, such as sodium citrate. The layer thickness of the ground cover will generally be up to 5 mm, more preferably 0.5-2 mm.

If the starting point is a dry mixture dispersed in water, to achieve the desired layer thickness the medium which comprises biologically degradable fibres and alginate in water will be sprayed out in a quantity of 8-15 m³ per hectare of ground.

In one attractive embodiment of the method described above, the dry product comprises bentonite as filler, and the trivalent aluminium ions are provided by using an acidified calcium chloride solution which releases aluminium ions from the bentonite. Bentonite is a naturally occurring aluminium silicate material; if an aluminium silicate material of this type is mixed into an acidic solution, aluminium ions will be dissolved and thus, in this case together with the calcium ions, form an attractive crosslinking agent for the suspended alginate. The pH of a calcium chloride solution of this type used is expediently approximately 4, i.e. in the acid range.

In a highly attractive embodiment of the method according to the present invention, the biologically degradable fibres which have been applied from an aqueous medium and water-soluble alginate are mixed with at least one source of acid-releasable calcium ions and at least one source of acid-releasable aluminium ions, and after the fibres, the alginate and the sources of calcium and aluminium ions have been applied to the ground, an acid aqueous solution is fed to the material mixture in order to release calcium and aluminium ions from the respective sources so as to crosslink the alginate. The fact that the sources of aluminium and calcium ions are applied to the ground together with the biologically degradable fibres and the water-soluble alginate creates a very simple method in which a crosslinked ground cover can be formed by simply acidifying the cover which has already been formed on the ground and in which the alginate is as yet uncrosslinked.

In a preferred embodiment, the source of calcium ions is tricalcium phosphate and the source of aluminium ions is bentonite.

When carrying out the method described above, in which aluminium ions and/or calcium ions are released in situ, it is expedient for the pH of the aqueous mixture of biologically degradable fibres, water-soluble alginate and sources of acid-releasable calcium and aluminium ions to be 5-6, while to crosslink the alginate by calcium and aluminium ions the pH of the mixture applied to the ground to be covered is reduced to below 5.

The quantities of bentonite and tricalcium phosphate to be used in the dry mixture that is to be used or the mixture to be applied to the ground are not critical. Working on the basis of a dry mixture which comprises 35% by weight of biologically degradable fibres and 10% by weight of alginate, there may, for example, be 5-30% by weight of tricalcium phosphate and 50-25% by weight of bentonite present; it is expedient to use, for example, 30% by weight of tricalcium phosphate and 25% by weight of bentonite. However, higher or lower quantities are not ruled out. If the starting point is not a dry mixture which can be dispersed in water, but rather the constituents are supplied separately, the quantities can be selected in accordance with the above distribution.

The invention will now be explained with the aid of a number of non-limiting examples. Unless stated otherwise, all percentages are weight-based.

### Example 1:

### a. Preparation of dry base mixture

| | | |
|---|---|---|
| cotton fibre | 30% | |
| wood fibre | 45% | |
| kaolin | 15% | (Kaolin K1; Dorfner) |
| Alginate | 10% | (Algogel 5541; Brenntag) |

The components were mixed to form a homogeneous mass.

### b. Preparation of suspension

925 litres of water were pumped into a tank (1500 litres) provided with a stirrer mechanism. 75 Kg of dry base mixture were suspended in this water with thorough stirring.

### c. Application of the ground cover

The tank containing the suspension was placed on an agricultural tractor and the suspension was applied to the ground via a tube with sprayers over the width of the area to be covered while the tractor was driving at a constant speed. The desired layer thickness can be set by means of the tractor speed and the sprayer pressure.
An aqueous 5% strength by weight CaCl₂ solution is sprayed, via a second sprayer system, parallel to the first, onto the first layer, comprising fibres and alginate, resulting in immediate fixing (crosslinking) of the first layer (100 kg CaCl₂ solution is used per 1000 kg of fibre suspension). The layer formed in this way follows the contours of the surface of the ground but does not provide an effective coverage of the surface of the ground. As soon as the alginate mixture comes into contact with CaCl₂, crosslinking takes place, which leads to considerably shrinkage of the cover.
There are two types of shrinkage, namely dry and wet shrinkage. Wet shrinkage of the ground cover takes place at the moment at which CaCl₂ comes into contact with the alginate. The concentration of CaCl₂ used to fix the alginate is responsible for this shrinkage. Dry shrinkage occurs when the fixed ground cover has being lying on the ground for longer than 1 week and manifests a certain amount of shrinkage. This shrinkage is related to the quantity of moisture which the ground cover loses as a result of the evaporation of water. The result of dry shrinkage is that the ground cover is not resistant to the influences of the weather. On account of the fact that the ground cover shrinks, the stress at the surface increases, with the result that the surface can crack and curl up more easily. Consequently, the wind can very easily get under the ground cover and blow it away.
The dry and wet shrinkage of the ground cover are determined as follows: the diameter of a circular surface of the ground cover is determined prior to fixing, half an hour after fixing (=wet shrinkage) and one week after fixing (=dry shrinkage). The difference in diameter of the ground cover before and after fixing (both wet and dry) is a measure of the shrinkage of the ground cover. If the fixative used is 5% CaCl₂ solution, the wet shrinkage of the ground cover is around 30%, while the dry shrinkage for the same fixing solution amounts to more than 50%. If a higher concentration of CaCl₂ is used, the wet shrinkage will increase.

### Example 1A:

### a. Preparation of dry base mix

| | | |
|---|---|---|
| cotton fibre | 30% | |
| wood fibre | 45% | |
| kaolin | 15% | (Kaolin K1; Dorfner) |
| Alginate | 10% | (Algogel 5541; Brenntag) |

### b. Preparation of suspension

The suspension is prepared in the same way as in Example 1.

### c. Application of the ground cover

c.f. Example 1, but instead of the ground cover being fixed using 5% strength by weight CaCl₂, the fixing medium uses the combination of 5% strength by weight CaCl₂ and 2.5% strength by weight AlCl₃ in water (again 100 kg of fixing medium per 1000 kg of fibre suspension). The combination of these two salt solutions gives a robust, continuous covering layer which is substantially free of wet and dry shrinkage of the surface. The wet shrinkage of the ground cover when using the abovementioned concentrations of CaCl₂ and AlCl₃ is max. 5%, while the dry shrinkage of the ground cover is max. 10% (the dry and wet shrinkage were determined in the same way as in Example 1. The enormous reduction in the dry shrinkage of the surface resulting from the combination of CaCl₂ and AlCl₃ in the fixing solution leads to a ground cover which is much more resistant to the influences of weather. There is now no stress at the surface of the ground cover, and consequently cracking and curling of the surface substantially will not occur. On account of the use of fibres in the ground cover, the latter is water-permeable and retains sufficient elasticity. The ground cover selectively transmits light depending on the pigment used. The layer is stable during the growth time of the crops and is resistant to mechanical loads. After the growth time, the layer can be mixed with the soil, after which it is broken down by microorganisms.

### Example 2:

### a. Preparation of dry base mixture

| | | |
|---|---|---|
| Wood fibre | 30% | |
| Cotton fibre | 20% | |
| Bentonite | 30% | (Microgel MB350S; Minelco) |
| Kaolin | 10% | (Kaolin K1; Dorfner) |
| Alginate | 10% | (Algogel 5541; Brenntag) |

The components were mixed to form a homogenous mass.

### b. Preparation of suspension

The suspension is prepared in the same way as in Example 1.

### c. Application of the ground cover

cf. Example 1. Once again, the alginate mixture is fixed using 5% strength by weight CaCl₂ solution (100 kg of fixing medium per 1000 kg of fibre suspension). The result of this application is the formation of a ground cover which exhibits wet and dry shrinkage. The wet shrinkage in this application is around 30%, while the dry shrinkage with the same fixing solution amounts to more than 50% (the wet and dry shrinkage are determined in the same way as in Example 1). On account of the considerable dry shrinkage in this application, this ground cover is not able to withstand the influences of weather.

### Example 2A:

### a. Preparation of dry base mixture

| | | |
|---|---|---|
| Wood fibre | 30% | |
| Cotton fibre | 20% | |
| Bentonite | 30% | (Microgel MB350S; Minelco) |
| Kaolin | 10% | (Kaolin K1; Dorfner) |
| Alginate | 10% | (Algogel 5541; Brenntag) |

The components were mixed to form a homogeneous mass.

### b. Preparation of suspension

The suspension is prepared in the same way as in Example 1.

### c. Application of the ground cover

cf. Example 1, except that in this case an acidified (pH 4) 5% strength by weight CaCl₂ solution is used (100 kg of fixing solution per 1000 kg of fibre suspension) to fix the ground cover. Using an acidified fixing solution leads to the formation of a robust, continuous covering layer (which is still water-permeable) which has a sufficient elasticity and is better able to withstand the influences of weather compared to the ground cover formed in Example 2. Both the dry and the wet shrinkage are considerably reduced. The wet shrinkage of the ground cover in this application has been reduced to 20%, while the dry shrinkage has been reduced to 25% (the wet and dry shrinkage are determined in the same way as in Example 1). The acidification of the 5% strength by weight CaCl₂ solution has caused part of the Al³⁺ which is present in the bentonite to be released and then react with the alginate. This leads to indirect delivery of Al³⁺, which has a positive effect on the wet and dry shrinkage of the ground cover.

### Example 3:

### a. Preparation of dry base mixture

| | | |
|---|---|---|
| Wood fibre | 25% | |
| Cotton fibre | 10% | |
| Bentonite | 25% | (Microgel MB350S; Minelco) |
| Calcium phosphate | 30% | (tricalciumphosphate C53-01; Schmidt) |
| Alginate | 10% | (Algogel 5541; Brenntag) |

The components are mixed to form a homogeneous mass.

### b. Preparation of suspension

The suspension is prepared in the same way as in Example 1.

### c. Application of the ground cover

cf. Example 1, but instead of an external fixative being delivered to the ground cover, such as a 5% strength by weight CaCl₂ solution, internal gelation is now used. This means that the crosslinking of the ground cover takes place from within with the aid of calcium phosphate present in the base mixture. The alginate and the other ingredients including a calcium phosphate (in particular tricalciumphosphate) are lightly acidified using an acid. By way of example, oxalic acid in a concentration of 2% by weight is used; other organic and inorganic acids can also be used, although organic acids are preferred. A buffer is used to keep the ground covering suspension, and therefore the ground cover which is formed, at pH of between 5 and 6 in order to avoid premature alginate crosslinking. An example of a buffer which may be used is a citric acid buffer, such as a solution of 30.1% by weight of dipotassium phosphate and 14.9% by weight of citric acid. The ground cover formed is then sprayed with an acidic solution, so that the pH of the mixture is reduced to below 5. It is sprayed, for example, with a solution of citric acid or another organic (nonvolatile) acid. To counteract fungal growth on the surface of the ground cover, it is also possible to use a mixture of hydrogen peroxide and per(oxy)acetic acid. Lowering the pH to a value lower than 5 will lead to Ca²⁺ ions being released from the calcium phosphate and Al³⁺ ions being released from the bentonite. The calcium and aluminium ions released react with the alginate within an hour and in this way effect the crosslinking of the ground cover from within. The use of internal gelation forms a robust, continuous covering layer (which is still water-permeable) which has sufficient elasticity and is even more resistant to the influences of weather than the ground cover formed in the other examples given above. Both the dry shrinkage and the wet shrinkage are considerably reduced. In this application, the wet shrinkage of the ground cover has been reduced to 0%, while the dry shrinkage has been reduced to 10% (the wet and dry shrinkage are determined in the same way as in Example 1).

## Claims

1. Biologically degradable ground cover consisting of a nonwoven-type material which is matched to the profile of the surface of the soil and is obtainable by applying an aqueous solution of a water-soluble alginate and biologically degradable fibres which are distributed in water to the soil and using metal cations to crosslink the water-soluble alginate, **characterized in that** the metal cations comprise a mixture of metal cations with a valency of two and with a valency of higher than two.

2. Biologically degradable ground cover according to claim 1, **characterized in that** the divalent metal cations are selected from magnesium and calcium ions, and the metal cations with a valency of higher than two comprise at least trivalent aluminium ions.

3. Biologically degradable ground cover according to claim 1-2, **characterized in that** the metal cations comprise calcium and aluminium ions.

4. Biologically degradable ground cover according to one or more of claims 1-3, **characterized in that** the fibres are selected from vegetable and animal fibres and mixtures of two or more of these fibre types.

5. Biologically degradable ground cover according to claim 4, **characterized in that** the fibres are selected from the group consisting of coir fibres, hemp fibres, paper fibres, cellulose fibres, manure fibres and plant fibres.

6. Biologically degradable ground cover according to claim 4-5, **characterized in that** the length of the fibres is from 500-3000 µm.

7. Biologically degradable ground cover according to claim 6, **characterized in that** the length of the fibres is from 500-2500 µm.

8. Biologically degradable ground cover according to claim 6-7, **characterized in that** the length of the fibres is from 500-2000 µm.

9. Biologically degradable ground cover according to one or more of the preceding claims, **characterized in that** a light retardant is present.

10. Biologically degradable ground cover according to one or more of claims 1-9, **characterized in that** a plasticizer is present.

11. Dry product for use in forming a biologically degradable ground cover according to claims 1-10, **characterized in that** the dry product comprises at least biologically degradable fibres of a length of from 500-3000 µm selected from vegetable and animal fibres and mixtures of two or more of these fibre types.

12. Dry product according to claim 11, **characterized in that** in addition to biologically degradable fibres, the product comprises a water-soluble alginate.

13. Dry product according to claim 12, **characterized in that** the product comprises 20-98% by weight of biologically degradable fibres and 0.5-20% by weight of water-soluble alginate, as well as fillers up to 100%.

14. Dry product according to claim 13, **characterized in that** the product comprises 35-50% by weight of biologically degradable fibres and 1.0-10% by weight of water-soluble alginate, together with fillers up to 100%.

15. Dry product according to one or more of claims 11-14, **characterized in that** the fibres are selected from the group consisting of coir fibres, hemp fibres, paper fibres, cellulose fibres, manure fibres and plant fibres.

16. Dry product according to one or more of claims 13-14, **characterized in that** the filler comprises a source of acid-releasable aluminium ions.

17. Dry product according to claim 16, **characterized in that** the filler is bentonite.

18. Dry product according to one or more of claims 13-14, **characterized in that** the filler comprises a source of acid-releasable calcium ions.

19. Dry product according to claim 17, **characterized in that** the filler is tricalcium phosphate.

20. Dry product according to one or more of claims 16-19, **characterized in that** the filler comprises both a source of acid-releasable aluminium ions and a source of acid-releasable calcium ions.

21. Method for forming a ground cover on the surface of an area of ground, in which biologically degradable fibres and a water-soluble alginate are applied to the ground from an aqueous medium and the alginate is crosslinked using divalent metal cations, **characterized in that** metal cations with a valency higher than two are also used for the crosslinking.

22. Method according to claim 21, **characterized in that** the metal cations with a valency of higher than two are trivalent aluminium ions.

23. Method according to claim 22, **characterized in that** the metal cations are provided by spraying an aqueous solution containing containing calcium and aluminium ions, which comprises 1-25% by weight of calcium chloride and 0.01-25% by weight of aluminium chloride, onto the ground cover which has been applied to the ground.

24. Method according to claim 21, **characterized in that** the solution comprises 1.0-5.0% by weight of calcium chloride and 0.01-5.0% by weight of aluminium chloride.

25. Method according to one or more of the preceding claims 21-24, **characterized in that** the ground cover is formed by adding a dry product according to one or more of claims 11-20 to an aqueous medium and distributing the suspension obtained in this way over the ground that is to be covered.

26. Method according to claim 25, **characterized in that** the dry product is added to water in a quantity of 20-200 g per litre of suspension.

27. Method according to claim 26, **characterized in that** the dry product is added to water in a quantity of 50-150 g per litre of suspension.

28. Method according to claim 25, **characterized in that** the dry product comprises bentonite as filler, and trivalent aluminium ions are provided by using an acidified calcium chloride solution which releases aluminium ions from the bentonite.

29. Method according to claim 28, **characterized in that** the calcium chloride solution used has a pH of approximately 4.

30. Method according to claim 21, **characterized in that** biologically degradable fibres applied from aqueous medium and water-soluble alginate are mixed with at least one source of acid-releasable calcium ions and at least one source of acid-releasable aluminium ions, and **in that** following application of the fibres, the alginate and the sources of calcium and aluminium ions to the soil, an acid aqueous solution is fed to the material mixture in order to release calcium and aluminium ions from the respective sources for the purpose of crosslinking the alginate.

31. Method according to claim 30, **characterized in that** the source of calcium ions is tricalcium phosphate.

32. Method according to claim 30, **characterized in that** the source of aluminium ions is bentonite.

33. Method according to one or more of claims 30-32, **characterized in that** the pH of the aqueous mixture of biologically degradable fibres, water-soluble alginate and sources of acid-releasable calcium and aluminium ions is 5-6, and the pH is reduced to below 5 in order to crosslink the alginate by means of calcium and aluminium ions in the mixture applied to the soil.
